# DEMANDE DE BREVET EUROPEEN

(11) **EP 4 711 406 A1**
(43) Date de publication de la demande: **18.03.2026**
(21) Numéro de dépôt: 25201796.7
(22) Date de dépôt: 12.09.2025
(51) Int. Cl.: C08J 11/08

(54) **PROCEDE D'EXTRACTION SELECTIVE DU POLYETHYLENE TEREPHTALATE, PET, D'UN MELANGE COMPLEXE DE THERMOPLASTIQUES ET THERMODURCISSABLES**

(30) Priorité: 17.09.2024 FR 2409859
(71) Demandeur: Commissariat à l'Energie Atomique et aux Energies Alternatives, 75015 Paris (FR); FAURECIA Sièges d'Automobile, 91151 Etampes Cedex (FR)
(72) Inventeur: BERKI, Thomas, 31300 TOULOUSE (FR); ANDREIADIS, Eugen, 30207 Bagnols-sur-Cèze Cedex (FR); CABOUILLET, Anne-Sophie, 91870 Boissy-le-Sec (FR); SENGES, Thierry, 91530 Saint Chéron (FR); EL HARFI, Jaouad, 90000 Belfort (FR)
(74) Mandataire: Ipsilon

(57) **Abrégé**

La présente invention vise un procédé d'extraction du polyéthylène téréphtalate, PET, d'un matériau solide le contenant en mélange avec un ou plusieurs matériaux thermoplastiques annexes et/ou un ou plusieurs matériaux thermodurcissables le cas échéant au moins un métal, ledit procédé comprenant au moins les étapes consistant à :
- Mettre en contact, dans un réacteur, ledit matériau solide avec un solvant choisi parmi le diméthyle-isosorbide, l'acétate de benzyle et leurs mélanges,
- Solubiliser sélectivement ledit polyéthylène téréphtalate par chauffage du mélange formé dudit matériau et dudit solvant, sous agitation et à une température variant de 185 °C à 220 °C,
- Isoler dudit mélange ledit solvant contenant le polyéthylène téréphtalate, PET solubilisé,
- Précipiter ledit polyéthylène téréphtalate dans ledit solvant isolé, et
- Récupérer le précipité de polyéthylène téréphtalate.

## Description

### Domaine technique

La présente invention se rapporte au traitement des déchets plastiques et plus précisément vise à proposer une méthode permettant d'isoler le polyéthylène téréphtalate, PET, contenu dans un mélange complexe de différents matériaux (thermoplastiques, thermodurcissables, métaux, fibres végétales, matières inorganiques), à l'image notamment des mélanges constitutifs d'un revêtement de siège ou de coiffe de siège de véhicule.

### Technique antérieure

Depuis le premier tiers du 20^{ème} siècle, les matériaux dits « plastiques » (les matériaux polymères), ont connu un incroyable essor compte-tenu des propriétés qui leur sont associées comme leur légèreté, leur flexibilité, leur durabilité, leur facilité de préparation et de mise en forme, leur propriété barrière au gaz ou à l'humidité et enfin leur grande diversité et versatilité.

De plus, ils ont été et sont très facilement produits à grande échelle tout en restant peu onéreux du fait qu'ils soient principalement produits à partir de ressources pétrosourcées.

L'évolution de la production mondiale de plastique en témoigne, elle a été multipliée par 20 depuis les années 60. En 2021, elle s'élevait à 390,7 millions de tonnes. Les principaux secteurs faisant l'usage des plastiques sont, par ordre d'importance : l'emballage (44 %), la construction et le bâtiment (18 %), l'automobile (8 %), l'industrie des appareils électriques et électroniques (7 %), l'électroménager et l'industrie des sports et loisirs (7 %) ou encore l'agriculture (7 %). Les principaux types de polymères produits sont par ordre d'importance : les polyoléfines (PP, PE-LD, PE-MD, PE-HD, 46 %), le PVC (13 %), le PET (6 %), les polyuréthanes (5,5 %), les résines thermodurcissables excluant les polyuréthanes (époxy et autres 7,1 %) et le polystyrène (5,3 %).

Compte-tenu de leur large utilisation, il y a conjointement une très forte augmentation de leur mise au rebut. La part (% massique) de plastique contenue dans les déchets municipaux récoltés est passée de moins de 1 % en 1960 à plus de 10 % dans les pays développés et en voie de développement en 2005. Le monde fait maintenant face à un problème croissant de pollution de la biosphère aux plastiques et leurs dérivés lié à leur dispersion/dégradation incontrôlée dans l'environnement.

Aujourd'hui, les industriels et chercheurs se mobilisent pour repenser la fabrication, l'utilisation, le réemploi et/ou le recyclage des déchets plastiques pour tendre vers un modèle d'économie circulaire.

La présente invention s'inscrit dans cette démarche en focalisant tout particulièrement sur le polymère de grande consommation qu'est le polyéthylène téréphtalate, PET. Le polyéthylène téréphtalate est un thermoplastique de type polyester obtenu par condensation à partir d'une succession d'unités d'acide téréphtalique et d'éthylène glycol. Parmi les propriétés du PET, on peut lister les propriétés distinctives suivantes : transparence, propriétés barrières, haute transition vitreuse (supérieure à 70 °C), bonnes propriétés mécaniques, semi-cristallinité et haut point de fusion (> 250 °C). Sous forme de déchets post-usage, le PET est le plus souvent, très peu recyclé.

Parmi les différentes techniques de recyclage des polymères, la plus utilisée pour beaucoup de thermoplastiques comme le PET est le recyclage mécanique. Les procédés de recyclage mécanique actuels tels que par exemple ceux illustrés dans CN 107 175 783, JP 2011 006521, incluent une succession d'étapes : la collecte, le tri, le broyage, le lavage, un éventuel deuxième tri et enfin l'extrusion. Ces étapes permettent de passer des déchets post-consommation en mélange à du PET recyclé. Pour un recyclage mécanique, il est important de séparer les différents plastiques avant l'étape d'extrusion. L'étape critique est donc l'étape de tri. Or, lorsque le solide à traiter est un mélange de polymères broyés très finement, il n'est pas possible de séparer les différents polymères qu'il contient par une des techniques de tri (manuel, optique, densité, flottation, électrostatique) utilisées actuellement avant l'étape de recyclage (mécanique ou chimique). Enfin, un désavantage du recyclage mécanique du PET est que le polymère récupéré a des propriétés mécaniques et rhéologiques dégradées à cause de la scission aléatoire due au traitement thermomécanique subit par les chaines macromoléculaires lors de l'extrusion. Ainsi, les chaînes peuvent perdre 26 % environ de masse molaire lors d'un procédé de recyclage mécanique.

L'autre grande famille de procédés développée pour le recyclage du PET (et particulièrement des polymères obtenus par polycondensation) est le recyclage chimique par dépolymérisation/dégradation chimique des chaînes macromoléculaires pour former des monomères ou leurs dérivés qui peuvent être utilisés comme building-blocks pour re-synthétiser du PET vierge avec donc les mêmes propriétés que la matière vierge initiale. Ce mode de recyclage chimique repose le plus souvent sur une technique de solvolyse, les plus étudiées sont : l'hydrolyse (EP 3 320 033), la méthanolyse (EP 4 136 159), l'alcoolyse, l'aminolyse, la glycolyse (EP4 087 895 et WO 2016/096768) ou encore l'ammonolyse.

Dans ces procédés, le solvant est aussi un réactif et vient réagir sur les fonctions esters dans le cas du PET pour reformer soit les monomères initiaux soit des molécules dérivées. La limite de cette technique est qu'elle peut être sensible aux impuretés/additifs et qu'elle n'est pas utilisable pour des mélanges complexes de polymères et précisément des flux contenant des mélanges de polycondensats (polyuréthanes, polyamides, époxy, PET). C'est, de plus, une voie de recyclage plus « longue » que pour les procédés de recyclages mécaniques : en revenant au monomère, il est nécessaire de re-synthétiser le polymère, alors que pour les deux autres techniques on récupère un polymère qu'il faut seulement reformuler et remettre en forme.

### Exposé de l'invention

Dans le cadre de la présente invention, il a donc été cherché à développer une méthode distincte des techniques précédentes et apte à permettre une extraction sélective du PET de mélanges complexes le contenant et qui s'affranchit d'une part des opérations de tri, requises dans un recyclage mécanique, et d'une détérioration significative de la structure chimique des chaînes polymères de PET.

### Résumé de l'invention

Ainsi, un premier aspect de la présente invention vise à protéger un procédé d'extraction sélective du polyéthylène téréphtalate, PET, d'un matériau solide le contenant en mélange avec :
- un ou plusieurs matériaux thermoplastiques annexes choisis parmi les polyoléfines, en particulier les polyéthylènes PE, les polypropylènes PP, les polychlorures de vinyle PVC, les éthylènes alcool vinylique EVOH, les éthylène-acétate de vinyle EVA, les élasthannes, les polyamides, en particulier les nylons 6 et 6/6, les élastomères, les polyacétals en particulier le polyoxyméthylène, et leurs mélanges, et/ou
- un ou plusieurs matériaux thermodurcissables choisis parmi les polyuréthanes, en particulier une mousse en polyuréthane, les résines époxy et leurs mélanges,
- et le cas échéant au moins un métal,
ledit procédé comprenant au moins les étapes consistant à :
- Mettre en contact, dans un réacteur, ledit matériau solide avec un solvant choisi parmi le diméthyle-isosorbide, l'acétate de benzyle et leurs mélanges,
- Solubiliser sélectivement ledit polyéthylène téréphtalate par chauffage du mélange formé dudit matériau et dudit solvant, sous agitation et à une température variant de 185 °C à 220 °C,
- Isoler dudit mélange, notamment par filtration, ledit solvant contenant le polyéthylène téréphtalate, PET solubilisé,
- Précipiter ledit polyéthylène téréphtalate dans ledit solvant isolé, notamment par refroidissement dudit solvant isolé à une température inférieure à 185 °C, et
- Récupérer le précipité de polyéthylène téréphtalate.

Au sens de l'invention, le terme « sélective » signifie que le PET est isolé du matériau solide sous une forme épurée de tout autre matériau thermoplastique et/ou thermodurcissable, cette forme épurée pouvant néanmoins comprendre un pigment colorant.

Certes, la technique de dissolution d'un thermoplastique, et en particulier du PET, est une technique déjà connue et employée pour le recyclage de ces derniers (WO 2022/221832 ; WO 2022/229129 ; CN 11 610 2782). Toutefois, à la connaissance des inventeurs, cette technique n'a jamais été retenue pour extraire sélectivement du PET d'un flux de déchets réunissant une pluralité de matériaux comme des thermoplastiques, des thermodurcissables, des métaux et des fibres cellulosiques à l'image par exemple des broyats de coiffes de sièges automobiles. Ainsi, dans le document WO 2022/221832, cette technique est uniquement appliquée sur un déchet plastique formé de contenants alimentaires comme par exemple des bouteilles d'eau et qui combinent seulement du PET et des additifs de coloration. Elle y est ainsi utilisée pour séparer ce PET des additifs colorants associés et rendre possible son recyclage sous une forme transparente. Dans le document CN 11 610 2782, cette technique est également mise à profit pour recycler le PET par dissolution à partir d'un flux de déchets composé seulement de PET c.a.d. en absence de tout matériau thermoplastique et/ou thermodurcissable annexe. Quant au document WO 2022/229129, il décrit un procédé de recyclage de polyesters et en particulier du PET constitutif de produits textiles mixtes contenant du PET et des fibres cellulosiques (coton, lin, etc.) et donc en absence de tout matériau thermoplastique et/ou thermodurcissable annexe.

Contre toute attente, les inventeurs ont constaté qu'il s'avère désormais possible d'extraire, le PET sélectivement et sans dégradation significative, d'un matériau le contenant en mélange avec une pluralité de composés annexes comme des thermoplastiques, des thermodurcissables, des métaux et des fibres cellulosiques sous réserve de considérer un protocole opératoire et un solvant du PET bien spécifique.

Ainsi, le procédé de la présente invention peut être appliqué pour l'extraction du PET contenu dans un siège ou une coiffe de siège de véhicule usagé et/ou dans un rebut de production de ces sièges ou coiffes et généralement destinés à être incinérés et/ou enfouis. En rendant possible une extraction sélective du PET d'un tel matériau solide, le procédé de la présente invention permet sa réutilisation en tant que PET recyclé, par exemple, dans un procédé d'extrusion ou sa revalorisation en tant que matière première dans un procédé de recyclage chimique.

Enfin, le procédé de la présente invention a pour avantage significatif d'être respectueux d'un point de vue environnemental. En effet, les solvants mis en jeu dans l'étape de mise en contact sont des solvants « verts » et non dangereux, c'est-à-dire non-toxique, non CMR, voire pour certains d'entre eux biosourcés. Ils sont stables chimiquement et facilement recyclables par distillation.

Selon un autre de ses aspects, la présente invention vise donc l'utilisation d'un procédé selon l'invention pour l'extraction sélective du PET contenu dans un déchet plastique comme par exemple un siège de véhicule, un revêtement siège de véhicule, une coiffe de siège de véhicule usagé et/ou un rebut de production de ceux-ci.

Elle vise en outre à protéger du PET recyclé, notamment coloré, obtenu par un procédé de l'invention.

D'autres caractéristiques, variantes et avantages du procédé selon l'invention ressortiront mieux à la lecture de la description, des exemples et figures qui vont suivre.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1a] et [Fig 1b] présentent les spectres IR du PET de référence et du PET extrait en exemple 1 selon un procédé de l'invention.
[Fig 2] présente la courbe ATG du PET de référence.
[Fig 3] présente la courbe ATG du PET extrait en exemple 1 selon un procédé de l'invention.
[Fig 4a] présente les chromatogrammes normalisés GPC-SECs du PET de référence et du PET extrait en exemple 1 selon un procédé de l'invention.
[Fig 4b] présente les distributions en masse molaire normalisées GPC-SEC du PET de référence et du PET extrait en exemple 1 selon un procédé de l'invention.
[Fig 5a] et [Fig 5b] présentent les spectres IR du PET de référence et du PET extrait en exemple 2 selon un procédé de l'invention.
[Fig 6] présente la courbe ATG du PET extrait en exemple 2 selon un procédé de l'invention.
[Fig 7a] présente les chromatogrammes normalisés GPC-SECs du PET de référence et du PET extrait en exemple 2 selon un procédé de l'invention.
[Fig 7b] présente les distributions en masse molaire normalisées GPC-SEC du PET de référence et du PET extrait en exemple 2 selon un procédé de l'invention.
[Fig 8a] et [Fig 8b] présentent les spectres IR du PET de référence et du PET extrait en exemple 3 selon un procédé de l'invention.
[Fig 9] présente la courbe ATG du PET extrait en exemple 3 selon un procédé de l'invention.
[Fig 10a] présente les chromatogrammes normalisés GPC-SECs du PET de référence et du PET extrait en exemple 3 selon un procédé de l'invention.
[Fig 10b] présente les distributions en masse molaire normalisées GPC-SEC du PET de référence et du PET extrait en exemple 3 selon un procédé de l'invention.
[Fig 11] présente un chromatogramme GC obtenu pour le DMI et les solvants mis en contact avec les échantillons de PET 1 et 2, montrant la présence de trace de solvant (diméthyle isosorbide) dans le PET recyclé.

### Description détaillée

### Matériau solide traitable selon l'invention

Comme il ressort de ce qui précède, le procédé selon l'invention est tout particulièrement efficace pour isoler le composant PET d'un mélange complexe de matériaux thermoplastiques et/ou de matériaux thermodurcissables à l'image notamment des déchets plastiques combinant au PET :
- un ou plusieurs matériaux thermoplastiques annexes choisis parmi les polyoléfines, par exemple les polyéthylènes PE, les polypropylènes PP, les polychlorures de vinyle PVC, les éthylène alcool vinyliques EVOH, les éthylène-acétates de vinyle EVA, les élasthannes, les polyamides, comme par exemple les nylons 6 et 6/6, les élastomères, les polyacétals, tel que le polyoxyméthylène, et leurs mélanges, et/ou
- un ou plusieurs matériaux thermodurcissables annexes choisis parmi les polyuréthanes, en particulier une mousse en polyuréthane, les résines époxy, et leurs mélanges.

Selon un mode de réalisation particulier, ce matériau solide est un mélange contenant du PET et au moins un ou plusieurs thermoplastiques annexes notamment un ou plusieurs polyéthylènes, polypropylènes, polychlorures de vinyle, et polyamides, et un ou plusieurs thermodurcissables notamment un ou plusieurs polyuréthanes, et des fibres cellulosiques (coton, lin, chanvre, soie).

Ce type de mélange est notamment représentatif des matériaux solides présents dans des revêtements de sièges, en particulier dans des coiffes de siège de véhicule. En effet, ces objets contiennent généralement du PET en sus de plusieurs matériaux thermoplastiques annexes, de matériaux thermodurcissables tel que la mousse polyuréthane, de fibres cellulosiques (végétales et/ou synthétiques) et de matériaux métalliques.

Ainsi, les revêtements de sièges et les coiffes de sièges de véhicule peuvent être traités selon le procédé de la présente invention.

Ces revêtements de sièges et coiffes de sièges de véhicule peuvent être des rebuts de production, et/ou être issus d'un Véhicule Hors d'Usage tel que défini dans la directive européenne 2000/53/CE du 18 septembre 2000. Par exemple, les rebuts de production peuvent être des déchets de découpe produits lors de découpe des pièces formant un revêtement de siège et/ou une coiffe de siège de véhicule, un matériau destiné à être utilisé dans un revêtement de siège et/ou une coiffe de siège de véhicule mais dont les propriétés ne sont pas conformes à un dossier technique.

Plus précisément, un revêtement de siège, en particulier une coiffe de siège de véhicule, comprend typiquement des éléments rigides et des éléments souples.

Les éléments rigides sont généralement des éléments rigides métalliques tels que des tringles métalliques, des éléments rigides non métalliques tels que des profilés plastiques ou les deux.

Les éléments souples sont des éléments en PET en mélange avec un ou plusieurs composants choisis parmi :
- Les matériaux thermoplastiques annexes tels que les polychlorures de vinyle (PVC), les polypropylènes (PP), les polyéthylènes (PE), les polyamides, comme par exemple, le nylon 6, le nylon 6/6 ou leurs mélanges, les élastomères ou leurs mélanges,
- les matériaux thermodurcissables, telle qu'une mousse ou une résine polyuréthane, et,
- les fibres cellulosiques, comme par exemple, les fibres de coton, les fibres de lin, les fibres de chanvre, les fibres de soie ou leurs mélanges.

Pour des raisons évidentes, les revêtements de siège, en particulier les coiffes de siège de véhicule, sont au regard de leur grande taille, des matériaux solides dont la cinétique de solubilisation du PET peut être plus lente si leur dimension n'est pas réduite.

### Etapes de broyage et de tri

Ainsi, selon une variante de réalisation, le matériau solide, mis en contact avec le solvant selon l'invention, est sous la forme d'un broyat.

Dans un tel mode de réalisation, le procédé de l'invention peut comprendre, préalablement à l'étape de mise en contact du matériau solide avec le solvant conforme à l'invention, au moins une étape de broyage, notamment de broyage mécanique, du matériau solide à traiter. Le broyat ainsi obtenu peut présenter une taille particulaire variant de 1 à 100 mm, et en particulier de 1 à 10 mm, avec le cas échéant quelques traces de pièces de broyats de taille variant de 10 à 50 mm.

Selon un mode de réalisation particulier, le procédé de l'invention peut comprendre la mise en contact avec le solvant du matériau solide pour former un broyat présentant notamment une taille particulaire variant de 1 à 100 mm et en particulier de 1 à 10 mm.

La taille des particules de broyat n'est pas déterminante quant à l'efficacité du procédé. Néanmoins, il a été constaté que la mise en œuvre d'un broyat permet avantageusement d'accélérer la cinétique de solubilisation du PET.

Dans une autre variante de réalisation, le procédé de la présente invention peut aussi comprendre, entre l'étape de broyage et l'étape de mise en contact, une étape de tri dédiée à isoler dudit broyat, sa composante thermoplastique et/ou thermodurcissable, pour sa mise en contact consécutive avec le solvant conforme à l'invention.

Dans un mode réalisation particulier, le procédé peut comprendre, entre ladite étape de broyage et ladite étape de mise en contact, une étape de tri dédiée à isoler une ou plusieurs composantes thermoplastiques et/ou thermodurcissables dudit broyat pour sa mise en contact consécutive avec ledit solvant.

Cette étape de tri permet également de maximiser la quantité de matériau comprenant du PET et donc d'optimiser le rendement du procédé. Cette étape permet également de ne pas introduire de matériaux métalliques qui sont connus pour endommager le réacteur dans lequel la réaction de solubilisation du PET est réalisée.

Dans une variante de réalisation, notamment lorsque le matériau solide à traiter dérive d'un matériel source notamment de grande taille et en particulier d'un revêtement de siège ou une coiffe de siège de véhicule, l'étape de broyage du procédé selon l'invention peut comprendre :
- une étape de déchiquetage/concassage, dudit matériel source pour le fragmenter en une taille particulaire variant de 30 mm à 120 mm, et éventuellement,
- une étape consécutive de granulation desdits fragments obtenus.

Le matériel source en matériau solide peut ainsi être un déchet plastique contenant du PET, en particulier un revêtement de siège de véhicule, une coiffe de siège de véhicule usagé et/ou un rebut de production de ceux-ci.

La mise en œuvre de l'étape de déchiquetage/concassage relève des connaissances de l'homme du métier.

L'étape de granulation peut être mis en œuvre par n'importe quelle unité de granulation connue de l'homme du métier.

Comme précisé ci-dessus, le broyat obtenu à partir d'une pièce solide comme par exemple un revêtement de siège et/ou une coiffe de siège de véhicule comprend généralement les éléments rigides et les éléments souples de cette pièce. Il est donc avantageux qu'un tel broyat fasse l'objet d'une étape de tri. Selon un mode de réalisation particulier, cette étape de tri peut comprendre au moins :
- un tri par électromagnétisme pour séparer et récupérer :
   d'une part les éléments rigides métalliques, et
   d'autre part les éléments rigides non métalliques et les éléments souples,
- un tri par densité des éléments rigides non métalliques et les éléments souples pour séparer et récupérer d'une part les éléments souples dont la densité est inférieure ou égale à la densité des éléments souples en PET, et d'autre part les éléments rigides non métalliques et les éléments souples dont la densité est supérieure à la densité des éléments souples en PET.

Les éléments souples dont la densité est inférieure ou égale à la densité des éléments souples en PET sont ensuite mis en contact avec le solvant considéré dans le procédé de l'invention. Par exemple, les éléments souples dont la densité est inférieure ou égale à la densité des éléments souples en PET sont les éléments souples en PET et au moins un élément choisi parmi les éléments souples en polypropylène, PP, les éléments souples en polyéthylène, PE, les éléments souples en élastomère, les éléments souples en un ou plusieurs matériaux thermodurcissables annexes, les fibres cellulosiques, les polyamides, les éléments souples en polychlorure de vinyle, PVC et leurs mélanges.

Les sous-étapes de tri par électromagnétisme et par densité sont des étapes classiques connues de l'homme du métier. Il sait les adapter au broyat obtenu à partir du revêtement de siège, en particulier de la coiffe de siège de véhicule.

Avantageusement, le broyat issu de ces deux sous-étapes de tri peut comprendre au moins 60 % et d'au plus 99 % en poids de polyesters dont principalement du PET, au plus 30 % en poids de PU, au plus de 10 % en poids de PE et de PP, au plus de 10 % en poids en PA, au plus 5 % de PVC et au plus 5 % d'élastomère.

### Etape de solubilisation sélective du PET

D'une manière générale, la quantité en solvant est ajustée au regard de la quantité pressentie en PET dans le matériau solide à traiter.

En particulier, le rapport pondéral entre ledit PET et ledit solvant, PET/solvant, varie de 1:50 à 1:1 et en particulier de 1:20 à 1:5.

Comme il ressort de ce qui précède, la solubilisation du PET dans le solvant considéré selon l'invention est réalisée à une température variant de 185 °C à 220 °C. Il s'agit d'une solubilisation sélective.

Au sens de l'invention, l'expression « solubilisation sélective » du PET entend signifier que le PET est le composé des composants thermoplastiques et/ou thermodurcissables du matériau solide traité majoritairement solubilisé dans le solvant et dans la plage de températures requis selon l'invention.

En particulier, la sélectivité de la réaction de solubilisation du PET est supérieure à 50 %, en particulier supérieure à 90 %, plus particulièrement supérieure à 99 %.

Selon une variante, le solvant et le matériau sont introduits dans le réacteur à une même température, en particulier la température ambiante 22 °C +/- 5 °C et leur mélange y est chauffé à une température variant de 185 °C à 220 °C le temps nécessaire à la solubilisation du PET. Ce temps de chauffage peut varier de 15 minutes à 3 heures.

Selon un mode réalisation préférée, la réaction de solubilisation sélective est réalisée sous atmosphère inerte, par exemple sous azote ou argon, et sous agitation mécanique.

### Etape d'isolement dudit mélange

Selon un mode réalisation préférée, en ce qui concerne le réacteur, il est équipé d'un système de filtration ou d'une section dédiée à la filtration dans lequel est disposé le matériau solide à traiter et qui permet de récupérer le solvant contenant le soluté de PET séparé de toute fraction solide ou insoluble.

Ce mode de configuration est également propice à la réalisation d'étape(s) préalable(s) de purification de ce broyat.

Selon une variante de réalisation, la réaction peut être réalisée au sein d'un « réacteur » micro-onde, en quel cas le chauffage est réalisé par micro-ondes.

Le solvant contenant le PET solubilisé est isolé. Cette séparation peut être opérée selon différentes techniques usuelles mais généralement est privilégiée par filtration.

### Etape de précipitation dudit PET

Le PET présent à l'état de soluté dans le solvant ainsi isolé est récupéré par précipitation. Cette précipitation peut être réalisée par différents modes.

On sait notamment que l'introduction d'un anti-solvant du PET, dans le solvant contenant le PET, peut être un moyen efficace. Néanmoins, ce mode de précipitation n'est pas retenu dans le cadre de la présente invention dans la mesure où il nécessite de faire appel à un solvant supplémentaire.

Ainsi, le procédé selon l'invention est dénué de la mise en œuvre d'un anti-solvant du PET. Au sens de l'invention, un anti-solvant du PET, est un solvant ne permettant pas de solubiliser le PET même à température élevée.

Dans le cadre de la présente invention, le PET est précipité par refroidissement du solvant le contenant au-dessous de la température de solubilisation du PET.

Selon une variante particulière, ce refroidissement est réalisé par ajout du même solvant que celui mis en contact avec le matériau solide à traiter c'est-à-dire un solvant choisi parmi le diméthyle-isosorbide, l'acétate de benzyle et leurs mélanges, porté à une température telle que la température de son mélange avec le solvant contenant le PET solubilisé soit inférieure à 185 °C.

En particulier, le solvant ajouté peut être à une température inférieure à 170 °C.

### Etape de récupération du PET précipité

Le PET ainsi précipité est récupéré, généralement par filtration, le cas échéant lavé avec du diméthyle-isosorbide, puis séché, en particulier sous-vide notamment à 120 °C.

Comme il ressort des exemples ci-après, le PET extrait selon l'invention est relativement pur car sous une forme purifiée de tout composant thermoplastique et/ou thermodurcissable annexe. Par ailleurs, les analyses infra-rouges et de chromatographie d'exclusion stérique le démontrent aussi. Ceci confirme qu'il ne contient pas d'autres polymères dont les profils seraient susceptibles d'impacter le sien.

Il est également constaté que le PET n'est pas modifié dans son comportement thermique et mécanique suite à son extraction selon le procédé de l'invention.

Dans le mode de réalisation où le procédé est mis en œuvre sur un matériau solide contenant du PET en mélange avec un ou plusieurs pigments colorants, à l'image par exemple des matériaux constitutifs de revêtement de sièges de véhicule, le PET récupéré est généralement obtenu en mélange avec au moins l'un de ces pigments colorants. En effet, lors de la solubilisation sélective, le colorant du PET reste en forte interaction avec le polymère et c'est un PET coloré qui est récupéré. Avantageusement, la réutilisation de ce PET coloré pour la fabrication d'un revêtement de couleur apparentée peut permettre de diminuer la quantité voire de s'affranchir d'additif de coloration.

D'autres caractéristiques, variantes et avantages des matériaux composites selon l'invention, de leur préparation et de leur mise en œuvre, ressortiront mieux à la lecture des exemples et figures qui vont suivre, donnés à titre illustratif et non limitatif de l'invention.

Bien que le PET extrait selon l'invention soit relativement pur car sous une forme purifiée de tout composant thermoplastique et/ou thermodurcissable annexe, il comprend des traces de solvant mis en œuvre dans le procédé de la présente invention.

Ainsi, la présente invention porte également sur une composition comprenant du PET recyclé et un solvant choisi parmi le diméthyle-isosorbide, l'acétate de benzyle et leurs mélanges, en particulier le diméthyle-isosorbide.

De façon avantageuse, la détection du solvant dans le PET recyclé permet de tracer le PET issu du procédé de la présente invention.

Le solvant étant présent sous forme de trace dans la composition comprenant du PET recyclé, ladite composition peut comprendre moins de 2 % en masse de solvant par rapport à la masse totale de ladite composition, en particulier moins de 0,5 % plus particulièrement moins de 0,1 %.

La composition peut consister en PET recyclé et un solvant choisi parmi le diméthyle-isosorbide, l'acétate de benzyle et leurs mélanges, en particulier le diméthyle-isosorbide. Le PET recyclé de cette composition peut être coloré.

### Exemple

### Exemple 1 : Récupération d'un PET recyclable, contenu dans un mélange synthétique de thermoplastiques et de thermodurcissables commerciaux

Dans un réacteur en verre, on place :
- 1 g de polyéthylène téréphtalate (CAS : 25038-59-9, fournisseur Goodfellow),
- 0,5 g de polyamide 6 (nylon 6 ou PA6, CAS : 25038-54-4, fournisseur Sigma Aldrich),
- 0,5 g de polyamide 66 (nylon 6/6 ou PA 6/6, CAS : 31131-17-2, fournisseur Sigma Aldrich),
- 0,5 g de polypropylène (PP, CAS : 9003-07-0, Mn 97000 g.mol⁻¹ et Mw 340 000 g.mol⁻¹, fournisseur Sigma Aldrich),
- 0,5 g de polyuréthane (MDI [4,4'-diisocyanate de diphénylméthylène] polyester/polyéther polyuréthane, CAS : 68084-39-9), et
- 20 mL de diméthyle-isosorbide (grade Biorenewable Reagent plus > 99%, CAS : 5306-25-4, fournisseur Sigma Aldrich).

Après avoir ajouté un barreau aimanté, le réacteur contenant le mélange est chauffé dans un bain d'huile siliconé préchauffé à 170 °C et agité à l'aide d'une plaque chauffante munie d'un système d'agitation magnétique. Après 3 heures, on laisse la solution revenir à température ambiante, on retire toute la phase solide surnageante et on vidange le solvant. On rajoute 20 mL de solvant propre et on chauffe le mélange sous-agitation pendant 30 minutes à 170 °C pour laver le solide. Après refroidissement, on vidange le solvant de lavage et on introduit de nouveau 20 mL de diméthyle-isosorbide. Le mélange est agité et chauffé, cette fois, à 190 °C pendant 30 minutes pour permettre la solubilisation sélective du PET contenu dans le mélange. Le mélange est ensuite filtré (filtre inox de cut-off 60 µm chauffé à 200 °C) à chaud et le filtrat chaud est ajouté dans un bécher muni d'un agitateur magnétique, à 80 mL de diméthyle-isosorbide préchauffé à 120 °C. Le mélange des deux solutions entraine la précipitation du PET. La solution est agitée jusqu'à ce que la température du mélange redescende à 50 °C. La solution est filtrée sous vide pour séparer le PET précipité du solvant. Le gâteau récupéré est ensuite lavé avec du diméthyle-isosorbide, puis de l'éthyle acétate. Le solide est finalement séché sous-vide à 120 °C pendant 24 heures puis est caractérisé par ATG, IR et GPC. 0,909 g de PET ont été récupérés à la fin du procédé de solubilisation sélective présenté soit un rendement de 90,9 % de récupération du PET présent initialement.

Le PET ainsi isolé est caractérisé par analyses infra-rouge IR (ATR-FTIR, à l'aide d'un IRTracer-100 de marque SHIMADZU), de masse, GPC (Gel permeation chromatography : système Waters 2695, solvant hexafluoroisopropanol, une température d'analyse de 40 °C, un module de détection par indice de réfraction Waters 2414, la calibration a été réalisée avec des calibrants polyméthacrylate de méthyle étroit (PMMA) et des analyses d'ATG (système STA 409 PC de la marque NETZSCH).

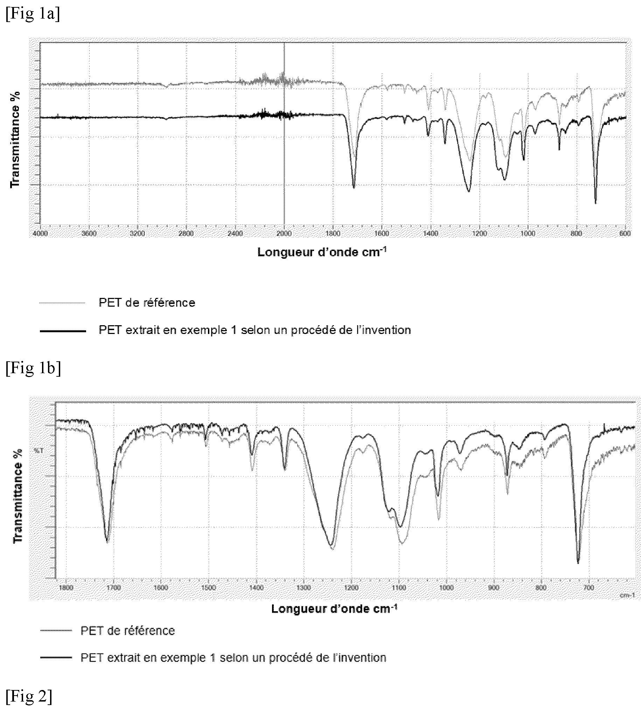

Les analyses IR réalisées et représentées en figures 1a et b confirment qualitativement et semi-quantitativement l'obtention d'une forme colorée de PET épurée de tout autre matériau thermoplastique et ou thermodurcissable et recyclable en tant que matériau PET. On observe une parfaite superposition des spectres du polymère recyclé et du PET de référence. Il n'y a aucune bande supplémentaire observée sur les spectres, confirmant l'efficacité du procédé utilisé pour la séparation et le recyclage du PET contenu dans des déchets plastiques en mélange.

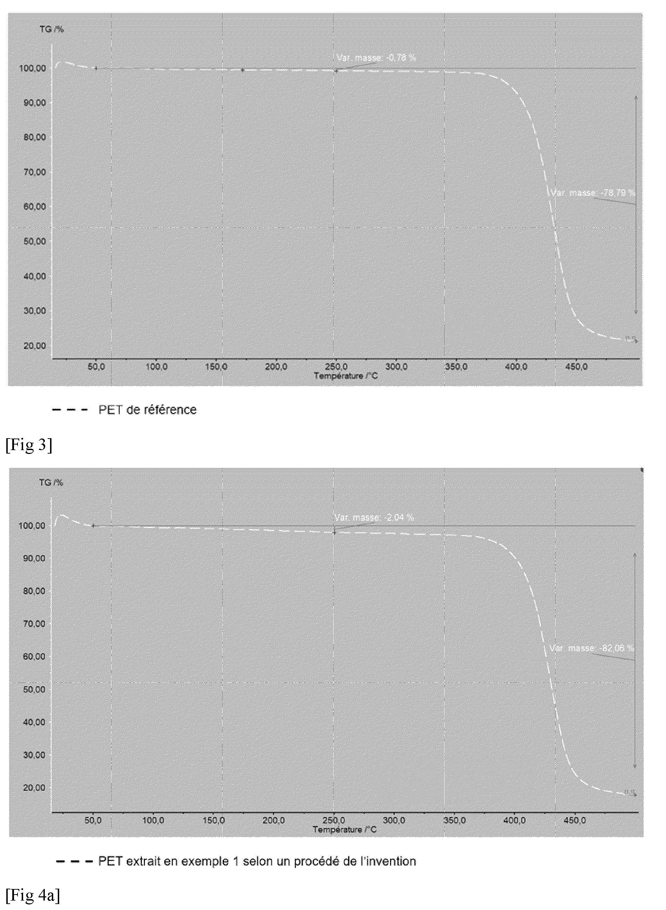

Les profils des courbes ATG représentées en figures 2 et 3 sont parfaitement similaires. Le PET ne semble donc pas (qualitativement) modifié dans son comportement thermique après la mise en œuvre du procédé d'extraction. Par ailleurs il s'agit aussi d'une bonne indication que le polymère récupéré ne contient pas d'autres polymères dont les profils thermiques varieraient.

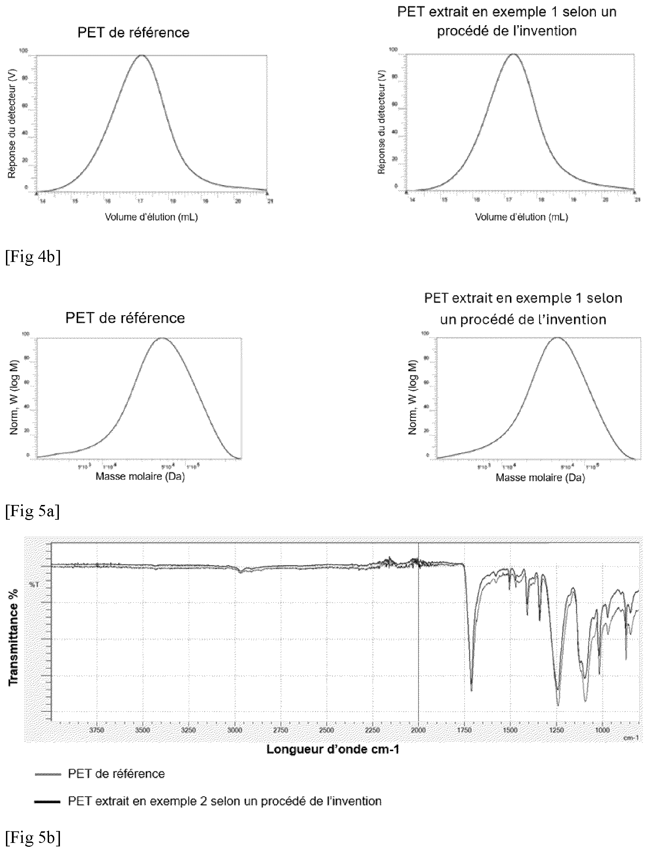

Les analyses de chromatographie de perméation de gel (CPG) représentées en figures 4a et 4b, mettent en évidence que le PET récupéré a un profil d'élution et une distribution en masse molaire quasi superposable au polymère de référence. Aucun pic supplémentaire n'est identifié confirmant la pureté de l'échantillon obtenu.

Les analyses de masse molaire (Tableau 1) mettent en évidence une légère dégradation des chaînes polymères qui perdent entre 9 et 13 % de masse molaire selon le choix d'indicateur de masse molaire regardé (Mn, Mw, Mp, Mz). Cette valeur est plus de 2 fois moins importante que dans le cas de la dégradation de PET par recyclage mécanique (26,4% de perte pour Mw).

**[Tableau 1]**

| **Echantillon** | **Mn(g/mol)** | **Mw (g/mol)** | **Mz (g/mol)** | **IP** | **Mp (g/mol)** | **Aire** | **conc. (mg/ml)** | **Notes** |
|---|---|---|---|---|---|---|---|---|
| PET de référence | 29217 | 69240 | 118849 | 2,4 | 48803 | 0,264 | 1,9602 | RAS |
| PET extrait en exemple 1 selon un procédé de l'invention | 26656 | 60360 | 103320 | 2,3 | 44433 | 0,274 | 2,0064 | RAS |

### Exemple 2 : Récupération d'un PET recyclable contenu dans un matériau issu du broyage de coiffes de sièges automobiles

Dans un réacteur en verre à double enveloppe de 1,5 L, muni : d'une vanne de soutirage/vidange, d'un panier de filtration en acier inoxydable (cut-off 250 µm) et d'un réfrigérant ; on place 50 g de broyat de coiffes de sièges automobiles (contenant notamment environ 70 % massique de PET, 20 % de mousses polyuréthanes, moins de 10 % de polypropylène (PP), moins de 10 % en nylon 6 ou nylon 66). à l'intérieur du panier et on ajoute 1-1,2 L de diméthyle-isosorbide préchauffé à 160 °C. La double enveloppe a été préchauffée à 170 °C. Le mélange est chauffé et agité (agitation mécanique) à 170 °C sous atmosphère inerte (flux de N₂) pendant 3 heures. Le solvant de cette première étape est récupéré par soutirage. 1 L de diméthyle-isosorbide « frais » préchauffé à 160 °C est introduit dans le réacteur. Le mélange est agité sous atmosphère inerte pendant 30 minutes en maintenant la température de la double enveloppe à 170 °C. Le solvant de lavage est soutiré tandis que le solide contenu dans le réacteur est retenu par le panier de filtration. 1 L de diméthyle-isosorbide « frais » préchauffé à 190 °C est de nouveau introduit dans le réacteur. Cette fois le mélange est agité et chauffé à 190 °C sous-atmosphère inerte pendant 45 minutes pour permettre la solubilisation sélective du PET contenu dans le mélange. Le solvant filtré par le panier et contenant le PET dissous est soutiré et est immédiatement ajouté lentement dans un second réacteur de 2 L contenant 750 mL de diméthyle-isosorbide préchauffé à 120 °C et muni d'un système d'agitation. Le mélange des deux solutions entraine la précipitation contrôlée du PET. La solution est agitée jusqu'à ce que la température du mélange redescende à 50 °C. La solution est centrifugée pour séparer le PET précipité du solvant. Le solide est ensuite lavé avec du diméthyle-isosorbide, puis de l'éthyle acétate. Le solide est finalement séché sous-vide à 120°C pendant 24 heures puis est caractérisé par ATG, IR et GPC. Sa cristallinité est déterminée par densimétrie à l'aide d'un pycnomètre à hélium. 29,5 g de PET ont été récupérés à la fin du procédé de solubilisation sélective du déchet industriel fourni.

Le PET ainsi isolé est caractérisé par analyses infra-rouge IR (ATR-FTIR, à l'aide d'un IRTracer-100 de marque SHIMADZU), de masse, GPC (Gel permeation chromatography : système Waters 2695, solvant hexafluoroisopropanol, une température d'analyse de 40 °C, un module de détection par indice de réfraction Waters 2414, la calibration a été réalisée avec des calibrants polyméthacrylate de méthyle étroit (PMMA) et des analyses d'ATG (système STA 409 PC de la marque NETZSCH).

Les analyses présentées ci-dessous confirment la solubilisation sélective du PET et l'efficacité du procédé développé pour séparer efficacement et donc valoriser le PET contenu à partir d'un flux de polymères en mélanges (thermoplastiques + thermodurcissables).

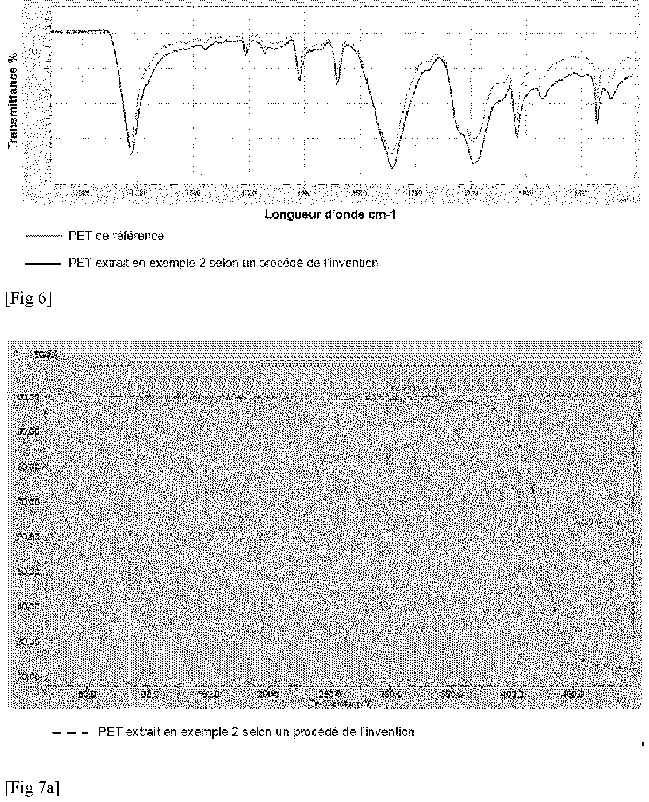

Les analyses IR réalisées et représentées en figures 5a et 5b confirment qualitativement et semi-quantitativement l'obtention de PET épuré de tout autre matériau thermoplastique et ou thermodurcissable. On observe une parfaite superposition des spectres IR du polymère recyclé et du PET de référence. Il n'y a aucune bande supplémentaire dans les spectres confirmant l'absence d'autres polymères. Les analyses IR confirment donc l'efficacité du procédé selon l'invention pour l'extraction sélective du PET contenu dans ce type de déchets plastiques et donc sa valorisation ultérieure.

Les profils des courbes ATG représentées en figures 2 et 6 sont parfaitement similaires. Le PET ne semble donc pas (qualitativement) modifié dans son comportement thermique après la mise en œuvre du procédé d'extraction de l'invention.

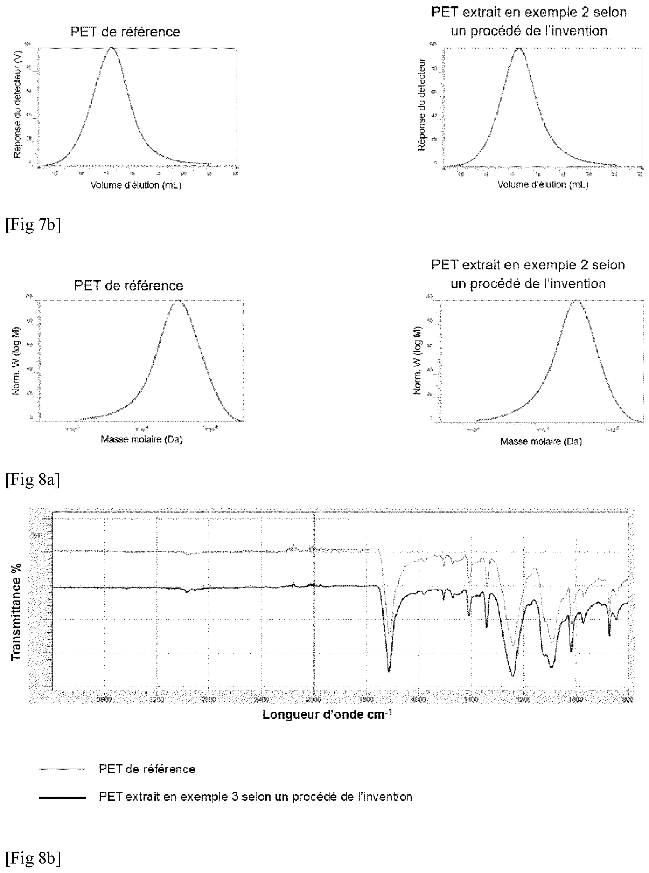

Les analyses de chromatographie de perméation de gel représentées en figures 7a et 7b mettent en évidence que qualitativement le PET récupéré montre un profil d'élution et une distribution en masse molaire quasi superposable au polymère de référence. Aucun pic supplémentaire n'est identifié confirmant la pureté de l'échantillon recyclé. '

Les analyses de masse molaires (Tableau 2) mettent en évidence une légère dégradation des chaînes polymères qui perdent entre 6 et 10 % de masse molaire selon le choix d'indicateur de masse molaire regardé (Mn, Mw, Mp, Mz). Cette valeur est plus de 2 fois moins grande que pour la dégradation de PET par mono-recyclage mécanique (26,4 % de perte pour Mw).

**[Tableau 2]**

| **Echantillon** | **Mn(g/mol)** | **Mw (g/mol)** | **Mz (g/mol)** | **IP** | **Mp (g/mol)** | **Aire** | **conc. (mg/ml)** | **Notes** |
|---|---|---|---|---|---|---|---|---|
| PET de référence | 24435 | 52144 | 85232 | 2,1 | 41435 | 0,266 | 2,04 | insoluble |
| PET extrait en exemple 2 selon un procédé de l'invention | 21918 | 46770 | 78620 | 2,1 | 38734 | 0,174 | 1,3 | insoluble |

### Exemple 3 : Récupération d'un PET recyclable contenu dans un matériau issu du broyage de coiffes de sièges automobiles

Dans un réacteur en verre à double enveloppe de 1,5 L, muni : d'une vanne de soutirage/vidange, d'un panier de filtration en acier inoxydable (cut-off 60 µm) et d'un réfrigérant ; on place 50 g de broyat de coiffes de sièges automobiles (contenant notamment environ 70 % massique de PET, 20 % de mousses polyuréthanes, moins de 10 % de polypropylène (PP), moins de 10 % en nylon 6 ou nylon 66). À l'intérieur du panier on ajoute 1-1,2 L de diméthyle-isosorbide préchauffé à 200 °C. La double enveloppe a été préchauffée à 205 °C. Le mélange est chauffé et agité (agitation mécanique) à une température de 190 °C sous atmosphère inerte (flux de N₂) pendant maximum 45 minutes pour permettre la solubilisation sélective du PET contenu dans le mélange. Le solvant filtré par le panier et contenant le PET dissous est soutiré et est immédiatement ajouté lentement dans un second réacteur de 2 L contenant 750 mL de diméthyle-isosorbide préchauffé à 120 °C et muni d'un système d'agitation. Le mélange des deux solutions entraine la précipitation contrôlée du PET. La température à la fin de l'ajout est de 137 °C. La solution est ensuite agitée jusqu'à ce que la température du mélange redescende à 50 °C. La solution est centrifugée pour séparer le PET précipité du solvant. Le solide est ensuite lavé avec du diméthyle-isosorbide, puis de l'éthyle acétate. Le solide est finalement séché sous-vide à 120 °C pendant 24 heures puis est caractérisé par ATG, IR et GPC. Sa cristallinité est déterminée par densimétrie à l'aide d'un pycnomètre à hélium. 29,22 g de PET ont été récupérés à la fin du procédé de solubilisation sélective du déchet industriel fourni.

Le PET ainsi isolé est caractérisé par analyses infra-rouge IR (ATR-FTIR, à l'aide d'un IRTracer-100 de marque SHIMADZU), de masse, GPC (Gel permeation chromatography : système Waters 2695, solvant hexafluoroisopropanol, une température d'analyse de 40 °C, un module de détection par indice de réfraction Waters 2414, la calibration a été réalisée avec des calibrants polyméthacrylate de méthyle étroit (PMMA) et des analyses d'ATG (système STA 409 PC de la marque NETZSCH).

Les analyses présentées ci-dessous confirment la solubilisation sélective du PET et l'efficacité du procédé développé pour séparer efficacement et donc valoriser le PET contenu à partir d'un flux de polymères en mélanges (thermoplastiques + thermodurcissables).

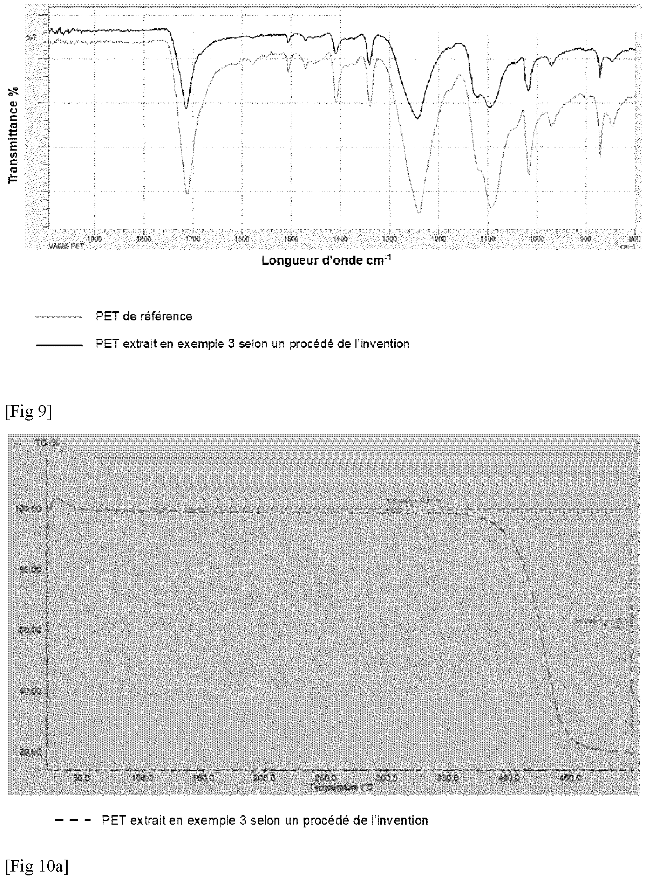

Les analyses IR réalisées et représentées en figure 8a et 8b confirment qualitativement et semi-quantitativement l'obtention de PET épuré de tout autre matériau thermoplastique et ou thermodurcissable. On observe une parfaite superposition des spectres IR du polymère recyclé et du PET de référence. Il n'y a aucune bande supplémentaire dans les spectres confirmant l'absence d'autres polymères Les analyses IR confirment donc l'efficacité du procédé selon l'invention pour l'extraction sélective du PET contenu dans ce type de déchets plastiques et donc sa valorisation ultérieure.

Les profils des courbes ATG représentées en figures 2 et 9 sont parfaitement similaires. Le PET ne semble donc pas (qualitativement) modifié dans son comportement thermique après la mise en œuvre du procédé d'extraction de l'invention.

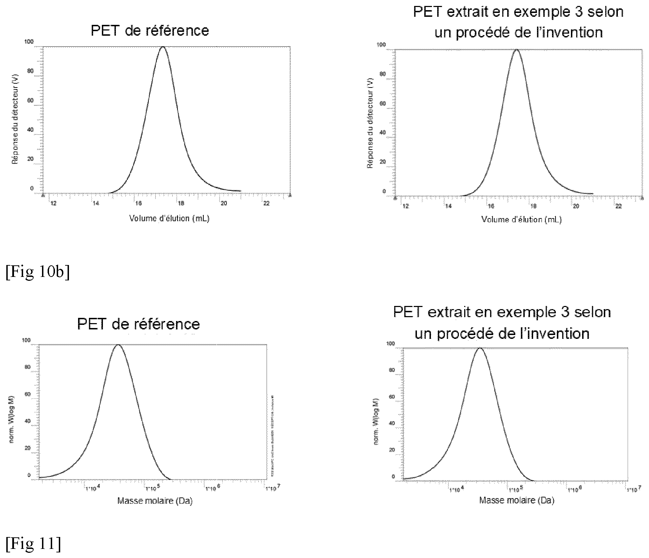

Les analyses de chromatographie de perméation de gel (CPG) représentées en figures 10a et 10b, mettent en évidence que le PET récupéré a un profil d'élution et une distribution en masse molaire quasi superposable au polymère de référence. Aucun pic supplémentaire n'est identifié confirmant la pureté de l'échantillon obtenu.

Les analyses de masse molaires (Tableau 3) mettent en évidence une légère dégradation des chaînes polymères qui perdent entre 6 et 8,2 % de masse molaire selon le choix d'indicateur de masse molaire regardé (Mn, Mw, Mp, Mz). Cette valeur est plus de 3 fois moins grande que pour la dégradation de PET par mono-recyclage mécanique (26,4 % de perte pour Mw).

**[Tableau 3]**

| **Echantillon** | **Mn (g/mol)** | **Mw (g/mol)** | **Mz (g/mol)** | **IP** | **Mp (g/mol)** | **Aire** | **conc. (mg/mL)** | **Notes** |
|---|---|---|---|---|---|---|---|---|
| PET de référence | 23472 | 45224 | 72325 | 1,9 | 36461 | 0,276 | 2,2 | RAS |
| PET extrait en exemple 3 selon un procédé de l'invention | 21752 | 41509 | 66945 | 1,9 | 34329 | 0,268 | 2 | RAS |

### Caractérisation de la présence de trace résiduelle de solvant dans le PET récupéré par analyse chromatographique en phase gazeuse (GC-HRMS)

Dans un vial en verre pour réacteur micro-onde pouvant contenir 2-5 mL de solvant, 500 mg de PET recyclé par le procédé de l'invention ont été mélangés à 2 mL d'acétonitrile ou à 2 mL d'éthyle acétate. Les tubes des deux mélanges après avoir été scellés ont été chauffés à 180 °C pendant 20 minutes à l'aide d'un réacteur micro-onde (modèle Initiator+ de la marque Biotage). Les paramètres opératoires utilisés sont : pre-stirring = 10 secondes, absorption level = very high, stir rate = 300 rpm. Le solvant récupéré a été filtré sur un microfiltre de cut-off 0,2 µm en PTFE et a été analysé par GC-MS. L'appareillage utilisé est un système de la marque Agilent composé des parties suivantes : un système GC Agilent 8890, un système masse Agilent 7250 GC/Q-TOF et un autosampler Agilent 7693A. La colonne utilisée est une DB-WAX Ultra Inert (30 m x 0,250 mm x 0,25µm). Les échantillons de solvant mis en contact avec le PET récupéré par le procédé de l'invention n'ont pas été dilués, l'échantillon de diméthyle isosorbide (DMI) a été préparé par dilution de 10 µL de DMI dans 990 µL d'acétate d'éthyle. Le volume d'échantillon prélevé est de 1 µL. Le système est équipé d'un injecteur split/splitless dont la température est 250 °C. Le split utilisé est de 1/100. Le débit d'hélium dans la colonne est maintenu à 2 mL/minutes.

Le programme de température du four de la colonne est le suivant :

**[Tableau 4]**

| | **Vitesse en °C/minutes** | **Température finale en °C** | **Temps d'attente en minutes** | **Temps d'analyse en minutes** |
|---|---|---|---|---|
| **Initial** | | 50 | 1 | 1 |
| **Rampe 1** | 10 | 170 | 5 | 18 |
| **Rampe 2** | 10 | 250 | 5 | 31 |

Le délai de solvant fixé est de 3,26 minutes. L'acquisition dure 31 minutes. Les échantillons sont analysés par impact électronique en mode positif (EI⁺). Le détecteur FID (flamme ionisation detector) est réglé à une température de 250 °C avec un débit d'H₂ de 30 mL/ minutes et un débit d'air de 400 mL/minutes. Dans ces conditions, le pic principal du DMI a un temps de rétentions de 14,03 minutes environ.

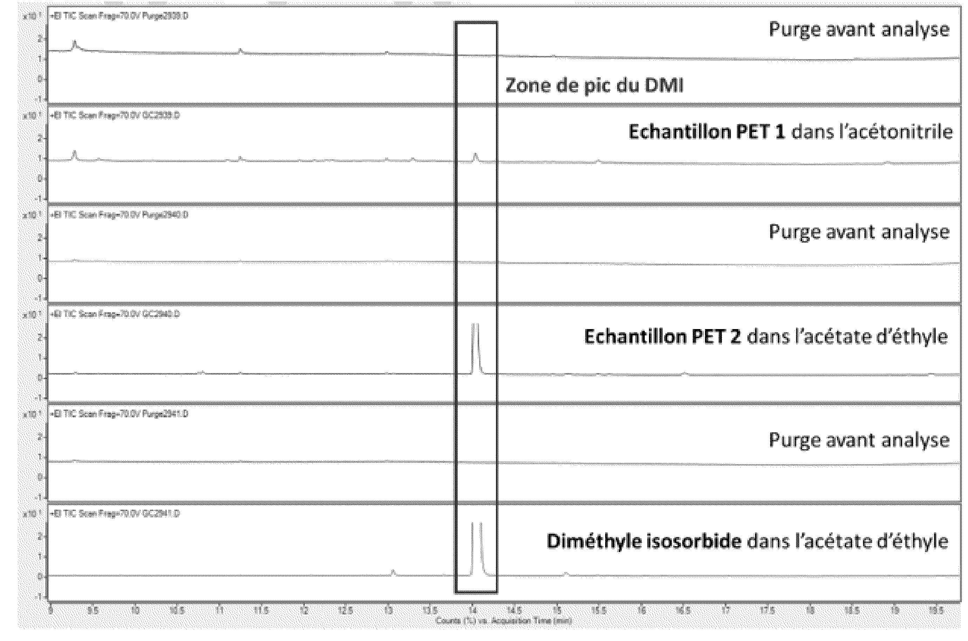

L'analyse des deux échantillons par GC-MS de solvant mis en contact avec du PET récupéré par le procédé de l'invention (échantillon 1 et échantillon 2) représentée en figure 11 a permis en comparaison avec l'échantillon de DMI de démontrer la présence de trace de solvant dans le PET récupéré post-séchage. Un pic dans chaque chromatogramme est présent à t = 14,03 minutes et le spectre de mass correspond bien pour ce pic au spectre du DMI selon la comparaison avec la bibliothèque de donnée NIST. L'absence de pic de DMI dans les chromatogrammes des blancs (purges) avant et après les mesures confirment que le DMI détecté n'est pas une contamination du système de GC-MS par des traces de solvant. Nous pouvons conclure qu'il est possible de tracer le PET issu du procédé de recyclage ici présenté d'extraction sélective du PET.

### Exemple 5 : Sélection de solvants pour la dissolution sélective du PET

### 5.1. Identification théorique des solvants par le modèle de Hansen

Dans le cadre du développement d'un procédé de recyclage sélectif du polyéthylène téréphtalate (PET) selon l'invention, le modèle de Hansen a été utilisé pour identifier des solvants capables de dissoudre le PET tout en laissant intacts les autres polymères présents dans les mélanges plastiques, tels que le polypropylène (PP), le polyamide 6 (PA6) et le polyamide 66 (PA66).

Le paramètre RED (Relative Energy Difference) a été utilisé comme indicateur principal. Ce paramètre quantifie l'affinité théorique entre un solvant et un polymère :
- RED < 1 : bonne compatibilité, dissolution théorique possible.
- RED > 1 : incompatibilité, le polymère ne devrait pas se dissoudre.

Les solvants testés incluent :
- Diméthyle-isosorbide (CAS : 5306-25-4),
- Acétate de benzyle (CAS : 140-11-4),
- Diméthyle phtalate (CAS : 131-11-3),
- Carbonate d'éthylène (CAS : 96-49-1).

Le tableau 5 présente les paramètres de solubilité théoriques calculés selon le modèle de Hansen, appliqués à différents solvants potentiels pour la dissolution sélective du PET.

**[Tableau 5]**

| | | | | | **RED = Ra/Ro** | | | | |
|---|---|---|---|---|---|---|---|---|---|
| **Solvant** | **T_{ebu} (°C)** | **δ_{D} (Mpa^{1/2})** | **δ_{P} (Mpa^{1/2})** | **δ_{H} (Mpa^{1/2})** | **PP** | **PA6** | **PA66** | **PET** | **Sélectivité théorique** |
| **Acétate de Benzyle** (selon l'invention) | 206 | 18.3 | 5.7 | 6.0 | 1.23 | 1.45 | 2.21 | 0.19 | **sélectif du PET** |
| **Diméthyle-Isosorbide** (selon l'invention) | 234 | 17.6 | 7.1 | 7.5 | 1.56 | 1,01 | 1,74 | 0.38 | **sélectif du PET** |
| **Diméthyle Phtalate** (comparatif) | 284 | 18.6 | 10.8 | 4.9 | 1.86 | 1,49 | 2,28 | 0.73 | **sélectif du PET** |
| **Carbonate d'éthylène** (comparatif) | 243-244 | 18.0 | 21.7 | 5.3 | 3.56 | 2,74 | 3,45 | 2,37 | **Anti-solvant PET** |

Les résultats théoriques obtenus à partir du modèle de Hansen montrent que le carbonate d'éthylène, utilisé comme solvant comparatif, présente un paramètre RED supérieur à 1 vis-à-vis du PET, ce qui indique une incompatibilité théorique et donc une incapacité à dissoudre sélectivement ce polymère.

En revanche, les solvants selon l'invention, à savoir le diméthyle-isosorbide (RED ≈ 0,38) et l'acétate de benzyle (RED ≈ 0,19), présentent des valeurs RED nettement inférieures, traduisant une affinité théorique plus forte avec le PET. Ces solvants se révèlent ainsi plus adaptés à une dissolution sélective du PET, comparativement au diméthyle phtalate (RED ≈ 0,73), qui bien que théoriquement compatible, reste moins performant en termes de sélectivité. Par ailleurs, les solvants sélectionnés selon l'invention présentent des températures d'ébullition plus basses que celles des solvants comparatifs, ce qui rend leur régénération par distillation moins énergivore et donc plus adaptée à un procédé industriel durable.

### 5.2. Validation expérimentale de la sélectivité des solvants

Pour confirmer les prédictions du modèle de Hansen, des tests de dissolution sélective ont été réalisés sur un mélange de PA6 et de PET, selon le protocole suivant :
Dans des tubes en verre scellés, on introduit :
- 250 mg de chaque polymère (PET, PA6),
- 5 mL de chaque solvant testé.

Les polymères sont sous forme de granulés commerciaux (Sigma Aldrich et Goodfellow). Chaque tube est équipé d'un barreau aimanté et placé dans un bain d'huile siliconé. Les mélanges sont agités pendant 1 heure à deux températures : 185 °C et 210 °C.

La formation d'un précipité après refroidissement dans le solvant ainsi que la disparation partielle ou complète des granulés de polymères à chaud sont les critères utilisés pour apprécier la dissolution de chaque polymère dans les solvants ainsi que la sélectivité d'un solvant pour un thermoplastique spécifique.

Les résultats des tests réalisés de dissolution à 185°C et 210°C sont présentés respectivement dans les tableaux 6 et 7, ci-dessous.

**[Tableau 6]**

| | À 185°C | |
|---|---|---|
| **Solvant** | PA6 | PET |
| **Acétate de Benzyle** (selon l'invention) | insoluble | Partiellement soluble |
| **Diméthyle-Isosorbide** (selon l'invention) | insoluble | Soluble |
| **Diméthyle Phtalate** (comparatif) | insoluble | Partiellement soluble |
| **Carbonate d'éthylène** (comparatif) | soluble | Soluble |

**[Tableau 7]**

| | À 210°C | |
|---|---|---|
| **Solvant** | PA6 | PET |
| **Acétate de Benzyle** (selon l'invention) | insoluble | soluble |
| **Diméthyle-Isosorbide** (selon l'invention) | insoluble | Soluble |
| **Diméthyle Phtalate** (comparatif) | Partiellement soluble | soluble |
| **Carbonate d'éthylène** (comparatif) | soluble | Soluble |

Ces tests comparatifs mettent en évidence l'avantage du diméthyle-isosorbide et de l'acétate de benzyle, qui sont sélectifs du PET :
- Le diméthyle-isosorbide permet une dissolution sélective du PET dès 185 °C.
- L'acétate de benzyle est sélectif à 210 °C.
- Le carbonate d'éthylène n'est pas sélectif ni à 185 °C ni à 210 °C.
- Le diméthyle phtalate permet une dissolution partielle mais sélective du PET à 185 °C, cependant à 210 °C, il dissout également partiellement le PA6, perdant ainsi sa sélectivité.

Les solvants selon l'invention remplissent donc les critères nécessaires pour la mise en œuvre d'un procédé de séparation sélective du PET à partir de déchets polymères contenant l'un des polymères tel que le PA6 en mélange avec du PET.

Ces solvants offrent une meilleure sélectivité, une efficacité énergétique accrue et une compatibilité avec un procédé de recyclage industriel.

## Revendications

1. Procédé d'extraction du polyéthylène téréphtalate, PET, d'un matériau solide le contenant en mélange avec :
- un ou plusieurs matériaux thermoplastiques annexes choisis parmi les polyoléfines, les polychlorures de vinyle PVC, les éthylènes alcool vinylique EVOH, les éthylène-acétate de vinyle EVA, les élasthannes, les polyamides, les élastomères, les polyacétals, et leurs mélanges, et/ou
- un ou plusieurs matériaux thermodurcissables choisis parmi les polyuréthanes, les résines époxy, et leurs mélanges,
- et le cas échéant au moins un métal,
ledit procédé comprenant au moins les étapes consistant à :
- Mettre en contact, dans un réacteur, ledit matériau solide avec un solvant choisi parmi le diméthyle-isosorbide, l'acétate de benzyle et leurs mélanges,
- Solubiliser sélectivement ledit polyéthylène téréphtalate par chauffage du mélange formé dudit matériau et dudit solvant, sous agitation et à une température variant de 185 °C à 220 °C,
- Isoler dudit mélange ledit solvant contenant le polyéthylène téréphtalate, PET solubilisé,
- Précipiter ledit polyéthylène téréphtalate dans ledit solvant isolé, et
- Récupérer le précipité de polyéthylène téréphtalate.

2. Procédé selon la revendication 1, dans lequel ledit solvant et ledit matériau solide à traiter sont mis en présence dans un rapport pondéral entre ledit PET contenu dans ledit matériau et ledit solvant, PET/solvant, variant de 1:50 à 1:1 et en particulier de 1:20 à 1:5.

3. Procédé selon l'une quelconque des revendications précédentes, dans lequel la solubilisation dudit PET est réalisée sous atmosphère inerte, par exemple sous azote ou argon, et sous agitation mécanique.

4. Procédé selon l'une quelconque des revendications précédentes, dans lequel ledit solvant contenant le polyéthylène téréphtalate solubilisé est isolé par filtration.

5. Procédé selon l'une quelconque des revendications précédentes, dans lequel ledit polyéthylène téréphtalate solubilisé est précipité dans ledit solvant isolé, par refroidissement dudit solvant à une température inférieure à la température de solubilisation du PET, en particulier par ajout dans ledit solvant, de diméthyle-isosorbide, acétate de benzyle ou un de leurs mélanges, porté à une température telle que la température de son mélange avec ledit solvant contenant le PET solubilisé, soit inférieure à 185 °C.

6. Procédé selon l'une quelconque des revendications précédentes, dans lequel ledit matériau solide est un mélange contenant du PET et au moins un ou plusieurs thermoplastiques annexes notamment un ou plusieurs polyéthylènes, polypropylènes, polychlorures de vinyle, polyamides, un ou plusieurs thermodurcissables notamment un ou plusieurs polyuréthanes, et des fibres cellulosiques (coton, lin, chanvre, soie).

7. Procédé selon l'une quelconque des revendications précédentes, dans lequel ledit matériau solide, mis en contact avec ledit le solvant, est sous la forme d'un broyat présentant notamment une taille particulaire variant de 1 à 100 mm et en particulier de 1 à 10 mm.

8. Procédé selon l'une quelconque des revendications précédentes, comprenant préalablement à l'étape de mise en contact dudit matériau solide avec ledit solvant, au moins une étape de broyage, notamment mécanique.

9. Procédé selon la revendication précédente comprenant, entre ladite étape de broyage et ladite étape de mise en contact, une étape de tri dédiée à isoler une ou plusieurs composantes thermoplastiques et/ou thermodurcissables dudit broyat pour sa mise en contact consécutive avec ledit solvant.

10. Procédé selon l'une quelconque des revendications 8 ou 9, dans lequel l'étape de broyage comprend :
- une étape de déchiquetage/concassage d'un matériel source en matériau solide pour le fragmenter en une taille particulaire variant de 30 mm à 120 mm, et éventuellement
- une étape consécutive de granulation desdits fragments obtenus.

11. Procédé selon la revendication précédente, dans lequel ledit matériel source en matériau solide est un déchet plastique contenant du PET, en particulier un revêtement siège de véhicule, une coiffe de siège de véhicule usagé et/ou un rebut de production de ceux-ci.

12. Utilisation d'un procédé selon l'une quelconque des revendications précédentes, pour l'extraction sélective du PET contenu dans un revêtement siège de véhicule, une coiffe de siège de véhicule usagé et/ou un rebut de production de ceux-ci.

13. PET recyclé, notamment coloré, obtenu par un procédé selon l'une quelconque des revendications 1 à 11.

14. Composition comprenant du PET recyclé et un solvant choisi parmi le diméthyle-isosorbide, l'acétate de benzyle et leurs mélanges.

15. Composition selon la revendication 14, dans laquelle le PET recyclé est coloré.
